# EUROPEAN PATENT APPLICATION

(11) **EP 2 063 429 A1**
(43) Date of publication of application: **27.05.2009**
(21) Application number: 08015829.8
(22) Date of filing: 09.09.2008
(51) Int. Cl.: G11B 27/031, H04N 7/24, G11B 31/00, G11B 23/03, G11B 23/04, G11B 23/087

(54) **Material data recording system, removable recording medium, recorder and method for managing material data**

(30) Priority: 16.11.2007 JP 2007298415
(71) Applicant: Kabushiki Kaisha Toshiba, Minato-ku, Tokyo 105-8001 (JP)
(72) Inventor: Sunakawa, Masashi, Minato-ku, Tokyo (JP)
(74) Representative: HOFFMANN EITLE

(57) **Abstract**

A material data recording system that is possible to save time and effort of entry of guidance information to a label stuck on a removable recording medium and to reduce omission in entry and an error in writing, etc. is proved. The material data recording system has a removable recording medium and a recorder which records a material data containing at least one of a voice and an image on the removable recording medium. The recorder has a guidance information acquisition part which acquires the guidance information about the material data from outside, a memory which records the guidance information and a writing part which records the guidance information in the removable recording medium together with the material data. The removable recording medium has a storage medium which records the guidance information and the material data, and a display which displays the guidance information.

## Description

### CROSS REFERENCE TO RELATED APPLICATION

This application is based upon and claims the benefit of priority from the Japanese Patent Application No.2007-298415, filed on November 16 and 2007, the entire contents of which are incorporated herein by reference.

### FIELD OF THE INVENTION

This invention relates to a material data recording system which displays guidance information of material data recorded in a removable recording medium in visible, and relates to the removable recording medium, a recorder and a method for managing material which are used for the material data recording system.

### DESCRIPTION OF THE BACKGROUND

Generally material data recording systems, such as a video recorder, record the material data containing at least one of a voice and an video on the removable recording medium which uses magnetic tape, a hard disk drive or flash memory, etc. And a label is stuck on this removable recording medium. Guidance information about the material data recorded is indicated on the label, and the label is used for management of the removable recording medium. Conventionally, this label was filled in by handwriting after the material data has been recorded with the recorder.

However, a method of writing the guidance information on the label in handwriting has a problem that writing takes time and effort when record of the material straddles two or more volumes. If defects, such as neglecting the writing to the label and writing by mistake, happened, it is difficult to find out a desired recording medium.

Japanese patent application publication No. Tokkai 2002-245747 discloses that an electronic paper is attached to a removable recording medium, and information on record data is displayed on the electronic paper with a driving device of the recording medium.

As mentioned above, the conventional label has a problem that entry by handwriting to a label requires time and effort, and has the problem that the management of the removable recording medium becomes difficult if there were omission of writing, error in writing, etc. According to the electronic paper attached on the recording medium, when writing arbitrary information, it is required to input the information by a keyboard etc., and there is a problem that writing is troublesome at a recording site.

### SUMMRY OF THE INVENTION

Accordingly the invention addresses the above problems and provides a material data recording system that is possible to save time and effort of entry of a guidance information to a label stuck on a removable recording medium and to reduce omission in entry and error in writing, etc. Furthermore this invention provides the removable recording medium, a recorder and a method for managing the material data which are used for the material data recording system.

According to the embodiment, the material data recording system has a removable recording medium and the recorder which records the material data containing at least one of a voice and a video on the removable recording medium. The recorder has a guidance information acquisition part which acquires guidance information about the material data from outside, a memory which records the acquired guidance information and a writing part which records the guidance information read out from the memory in the removable recording medium together with the material data. Furthermore the removable recording medium has a storage medium which records the guidance information and the material data, and a display which displays the guidance information recorded in the storage medium.

### BRIEF DESCRIPTION OF THE DRAWINGS

Fig. 1 is a block diagram showing a functional structure of a material data recording system according to an embodiment.

Fig. 2 is a block diagram showing a functional structure of a recorder.

Fig. 3 is a diagram showing an MXF file.

Fig. 4 is a block diagram showing a functional structure of a removable recording medium.

### DETAILED DESCRIPTION OF THE INVENTION

Hereinafter, an embodiment is explained in detail with reference to the drawings. According to the embodiment, a material data recording system has a removable recording medium and a recorder which records material data containing at least one of voice and an image in the removable recording medium. The recorder has a guidance information acquisition part which acquires guidance information about the material data from an outside instrument, a memory which records the acquired guidance information, and a writing part which records the guidance information read out from the memory to the removable recording medium together with the material data. Furthermore, the removable recording medium has a storage medium which records the guidance information and the material data, and a display which displays the guidance information about the information recorded in the storage medium.

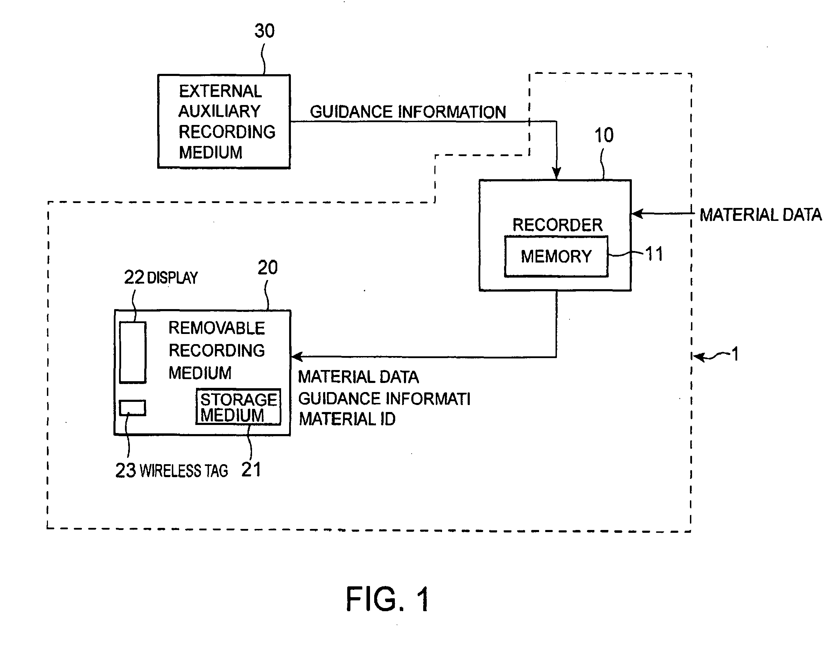

Fig. 1 is a block diagram showing a functional structure of the material data recording system according to one embodiment. Material data recording system 1 includes recorder 10 and removable recording medium 20. Recorder 10 is, for example, a video recorder provided with a camera and a microphone. Removable recording medium 20 which has storage medium 21, such as a hard disk drive or flash memory, is inserted in recorder 10. Removable recording medium 20 according to this embodiment, uses the flash memory as storage medium 21. Furthermore in material data recording system 1, external auxiliary recording media 30, such as a memory card, a USB (Universal Serial Bus) memory, is inserted in recorder 10 in use. The guidance information including contents of coverage, a videographer name, a place, date and time, and a material ID (Identification) showing a peculiar identification information on the material data is beforehand recorded in external auxiliary recording medium 30.

Recorder 10 reads the guidance information from external auxiliary recording medium 30, and records the guidance information in memory 11. After the guidance information is memorized in memory 11, external auxiliary recording medium 30 may be removed from recorder 10. Recorder 10 records the guidance information in storage medium 21 of removable recording medium 20 together with the material data, such as voice and a video captured. Removable recording medium 20 displays the guidance information recorded in storage medium 21 on display 22. Furthermore recorder 10 writes the material ID contained in the guidance information recorded in memory 11 to wireless tag 23 prepared in removable recording medium 20.

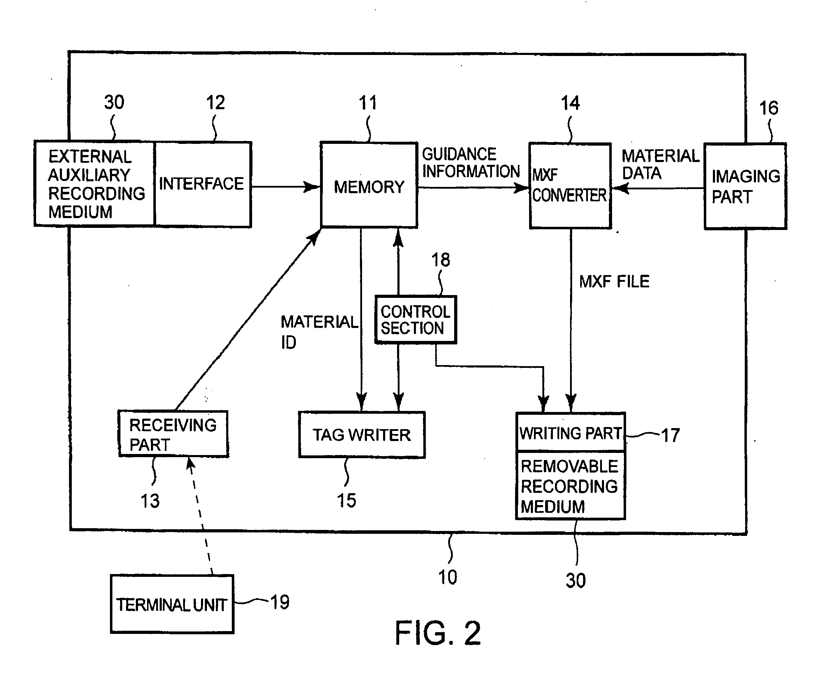

Fig. 2 is a block diagram showing a functional structure of recorder 10 according to the embodiment. External auxiliary recording medium 30 is connected to interface 12. Recorder 10 reads the guidance information recorded in external auxiliary recording medium 30, and records the guidance information in memory 11. Furthermore if the guidance information is not recorded in external auxiliary recording medium 30, or it is necessary to add information to the guidance information to be displayed, the guidance information is received from an external instrument by wireless communication. That is, the guidance information transmitted with wireless function, such as a BlueTooth (registered trademark) function or infrared ray communication function provided with terminal unit 19, such as a cellular phone and PDA (Personal Digital Assistant), can be received in receiving part 13, and can be recorded in memory 11. Furthermore external auxiliary recording medium 30 can be inserted in terminal unit 19 without inserting in interface 12 of recorder 10, and terminal unit 19 can also transmit the guidance information to recorder 10 by the wireless function. These interface 12 and receiving part 13 function as a guidance information acquisition part.

Memory 11 records the acquired guidance information. The guidance information recorded in memory 11 is outputted to MXF (Material exchange Format) converter 14. The material ID is extracted from the guidance information recorded in memory 11, and is outputted to tag writer 15, and tag writer 15 writes the material ID in wireless tag 23 of removable recording medium 20.

Imaging part 16 has a video camera and a microphone, and captures the material data of voice and an image, and outputs the material data captured to MXF converter 14.

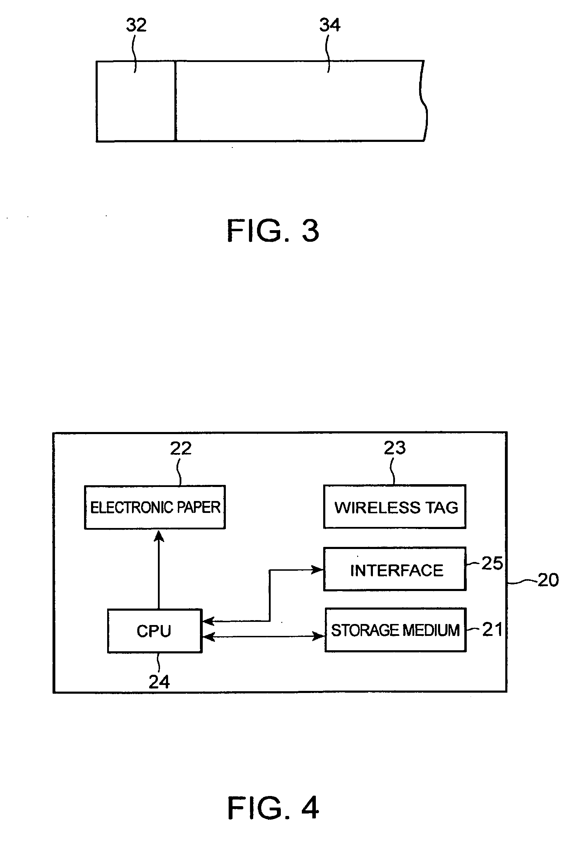

MXF converter 14 receives the guidance information and the material data, and converts these into an MXF file. Fig. 3 shows a diagram of an MXF file converted by MXF converter 14. The guidance information is stored in file header section 32, and the material data is stored in file body section 34. The MXF file converted by MXF converter 14 is recorded in storage medium 21 of removable recording medium 20 by writing part 17.

Control section 18 controls an output of the guidance information from memory 11 so as to convert the material data and the guidance information into the MXF file in MXF converter 14. Furthermore control section 18 controls writing of the material ID to wireless tag 23 by tag writer 15, and controls record of the MXF file to removable recording medium 20 by writing part 17.

Fig. 4 is a block diagram showing a functional structure of removable recording medium 20 according to one embodiment. The MXF file outputted from writing part 17 is inputted via interface 25, and is recorded in storage medium 21. The guidance information recorded in storage medium 21 is read out by CPU (Central Processing Unit) 24 which also functions as a display control part, and is displayed on display 22 which is, for example, an electronic paper.

According to the above-mentioned embodiment, recorder 10 records the guidance information beforehand recorded in external auxiliary recording medium 30 in memory 11, and converts the guidance information outputted from memory 11 and the material data obtained from imaging part 16 into the MXF file by MXF converter 14. And the MXF file is written in storage medium 21 of removable recording medium 20 by writing part 17. Removable recording medium 20 reads out the guidance information from the MXF file stored in storage medium 21, and displays the guidance information on display 22 by CPU 24 which functions as the display control part.

Thereby, the guidance information recorded in external auxiliary recording medium 30 is recorded in removable recording medium 20 together with the material data, and the guidance information is automatically displayed on display 22.

Furthermore control section 18 takes out the material ID from the guidance information recorded in memory 11, and tag writer 15 writes the material ID in wireless tag 23. Since wireless tag 23 has respectively peculiar tag ID, both the material ID and the tag ID are recorded in wireless tag 23.

If capturing time is long and removable recording medium 20 is exchanged for another removable recording medium 20, the guidance information already recorded in memory 11 is recorded also in exchanged removable recording medium 20. For this reason, it is unnecessary to newly record the guidance information in memory 11 of recorder 10 from external auxiliary recording medium 30.

Furthermore management of removable recording medium 20 becomes easy by registering the guidance information and a storage place of the removable recording medium 20, etc. into a database system with the tag ID and the material ID of removable recording medium 20. That is, the removable recording medium recorded with desired material data is searched based on the guidance information, for example, the contents of coverage, a videographer name, a place, and date and time using a database system, and the storage place of the removable recording medium, the tag ID and the material ID are specified. And the removable recording medium can be found by searching the wireless tag based on the tag ID or the material ID of the removable recording medium at the storage place specified.

As mentioned above, by the material data recording system according to the embodiment, time and effort at writing the guidance information of the material data on a label in handwriting can be saved, and an occurrence of omission in entry and error in writing can be reduced. Furthermore, if the removable recording medium is provided with the wireless tag, and the tag ID or the material ID are recorded, the management of the removable recording medium becomes still easier.

This invention is not limited to the above-mentioned embodiment. For example, in the above-mentioned embodiment, it is explained the case that after MXF converter 14 converts the guidance information and the recorded data into the MXF file, the MXF file is recorded in the removable recording medium the by writer 14. However, a means to record the MXF file in removable recording medium 20 is not limited to this.

Other embodiments or modifications of the present invention will be apparent to those skilled in the art from consideration of the specification and practice of the invention disclosed herein. It is intended that the specification and example embodiments be considered as exemplary only, with a true scope and spirit of the invention being indicated by the following.

## Claims

1. A material data recording system having a removable recording medium and a recorder for recording material data containing at least one of a voice and an image in the removable recording medium, the material data recording system, comprising:
the recorder having:
a guidance information acquisition part for acquiring the guidance information concerning to the material data from outside;
a memory for storing the guidance information acquired; and
a writing part for writing the guidance information read out from the memory and the material data to the removable recording medium, and
the removable recording medium having:
a storage medium for storing the guidance information and the material data,
a display for displaying the guidance information, and
a display control part for reading out the guidance information from the storage medium recorded with the guidance information and for displaying the guidance information on the display.

2. The material data recording system according to claim 1, wherein the guidance information acquisition part has an interface to which an external auxiliary recording medium recorded with the guidance information is connected.

3. The material data recording system according to claim 1, wherein the guidance information acquisition part has a receiving part which receives the guidance information transmitted from a terminal unit by wireless communication.

4. The material data recording system according to claim 1, wherein the recorder includes a converter for converting the guidance information and the material data into an MXF (Material exchange Format) file and outputting to the writing part.

5. The material data recording system according to claim 1. wherein the removable recording medium includes a wireless tag in which a tag ID has been written.

6. The material data recording system according to claim 5, wherein the guidance information contains a material ID (Identification) showing a peculiar identification information of the material data, and the recorder has a tag writer for writing the material ID to the wireless tag.

7. The material data recording system according to claim 1, wherein the display control part reads out the guidance information when the guidance information is recorded on the storage medium, and displays the guidance information on the display.

8. A removable recording medium, comprising:
a storage medium for recording material data containing at least one of a voice and an image and guidance information about the material data;
a display, and
a display control part for reading out the guidance information recorded in the storage medium, and for displaying the guidance information on the display.

9. The removable recording medium according to claim 8, further comprising a wireless tag in which a tag ID has been written.

10. The removable recording medium according to claim 9, wherein the guidance information includes the material ID and the material ID is written in the wireless tag.

11. The removable recording medium according to claim 8, wherein the display control part reads out the guidance information and displays the guidance information on the display when the guidance information is recorded in the storage medium.

12. A recorder, comprising:
an imaging part for capturing material data containing at least one of a voice and an image,
a guidance information acquisition part for acquiring guidance information about the material data from outside,
a memory for recording said acquired guidance information, and
a writing part for being connected with a removable recoding medium, and configured to write the guidance information read from the memory and the material data to the removable recoding medium.

13. The recorder according to claim 12, further comprising a converter for converting the guidance information and the material data into an MXF file and outputting to the writer.

14. The recorder according to claim 12, wherein the guidance information contains a material ID (Identification) showing a peculiar identification information of the material data, the removable recording medium has a wireless tag, and the recorder includes a tag writer for writing the material ID in the wireless tag.

15. A method for managing material data used in a material data recording system including a removable recording medium having a storage medium and a display, and a recorder for recording the material data containing at least one of voice and an image to the removable recording medium, having a memory,
the method for managing the material data comprising:
a step A for acquiring the guidance information about the material data from outside, and recording the guidance information in the memory;
a step B for reading out the guidance information from the memory and recording the guidance information in the storage medium together with the material data;
a step C for reading the guidance information from the storage medium; and a step D for displaying the guidance information on the display.

16. The method for managing the material data according to claim 15, wherein the step B includes a step of converting the guidance information recorded in the memory and the material data into an MXF file.

17. The method for managing the material data according to claim 15, wherein the removable recording medium has a wireless tag being written with a tag ID, the recorder has a tag writer and the guidance information contains a material ID showing a peculiar identification information of the material data; and
the method further comprising:
a step for extracting the material ID from the guidance information recorded in the memory, and
a step for writing the material ID in the wireless tag by the tag writer.
